# EUROPEAN PATENT SPECIFICATION

(11) **EP 0 540 249 B1**
(45) Date of publication and mention of the grant of the patent: **06.03.1996**
(21) Application number: 92309679.6
(22) Date of filing: 22.10.1992
(51) Int. Cl.: H01Q 25/02, H01Q 3/26, G01S 7/28

(54) **Processing method for antenna patterns**
Verarbeitungsverfahren für Antennendiagramme
Méthode de traitement pour diagrammes d'antenne

(30) Priority: 24.10.1991 JP 303756/91
(43) Date of publication of application: 05.05.1993
(73) Proprietor: NATIONAL SPACE DEVELOPMENT AGENCY OF JAPAN, Minato-ku Tokyo (JP)
(72) Inventor: Sezai, Toshihiro, c/o National Space Development, Minato-ku, Tokyo (JP)
(74) Representative: W.P. Thompson & Co.

(56) References cited:
- JP-A-52 004 147
- US-A- 4 599 622
- US-A- 5 017 929

## Description

The present invention relates to a processing method for antennas patterns, allowing the beam width of the antenna patterns to be compressed and the side lobe to be reduced, in an antenna apparatus of a monopulse power feed system.

Generally, the beam width and side lobe serve as indices representing the efficiency of antenna patterns; the smaller the beam width is or the smaller the side lobe is, the better the antenna pattern performance is. This does not only apply to antennas for receiving.

However, there is an opposed relationship between the beam width and the side lobe, the beam width being in inverse proportion to the size (length) of the antenna. That is, when the size of antenna is fixed, the side lobe will be larger if one tries to set the beam width smaller, and the beam width will be larger if one tries to set the side lobe smaller. When it is permitted to change the size of antenna, the antenna will be larger if one tries to set the beam width smaller, and the beam width will be larger if one tries to make the antenna smaller.

Therefore, for example, in a radar antenna, as a result of the relationship between the beam width and the side lobe, the resolution capability becomes worse, the identification capability for objects is reduced and a multiplicity of objects might be mistaken for one object, because the beam width is widened when the side lobe is made smaller. Conversely, when the beam width is made smaller, the side lobe is made larger and therefore, when there is an object in the direction of the side lobe, an erroneous judgment that there is an object in the observation direction might be made, even if there is no object in that direction. Moreover, as a result of the relationship between the beam width and the size of the antenna, when the beam width is reduced to half and the identification level is doubled, the size of the antenna will also be doubled. If the size is doubled, not only is the region occupied by the antenna larger, but also various adverse effects occur such as an increase in the weight of the antenna and the tendency of the antenna support structure to be larger. Conversely, when the size of the antenna is reduced by a half, the beam width is doubled, and the identification level is worse by 50%.

Thus, the beam width and the side lobe having opposed natures, it is impossible to optimize both of them together, so the beam width and the side lobe are subject to a compromise to a certain degree, taking into consideration the distribution for minimizing the beam width under the condition of a certain size of side lobe, or one for minimizing the side lobe under that of a certain beam width, such as Chebyshev distribution. Since the beam width and the size of an antenna have an opposed nature as described and since practical antennas often have a restriction such as the space to be occupied by the antenna, the beam width is subject to compromise in a certain degree in the actual practical situation.

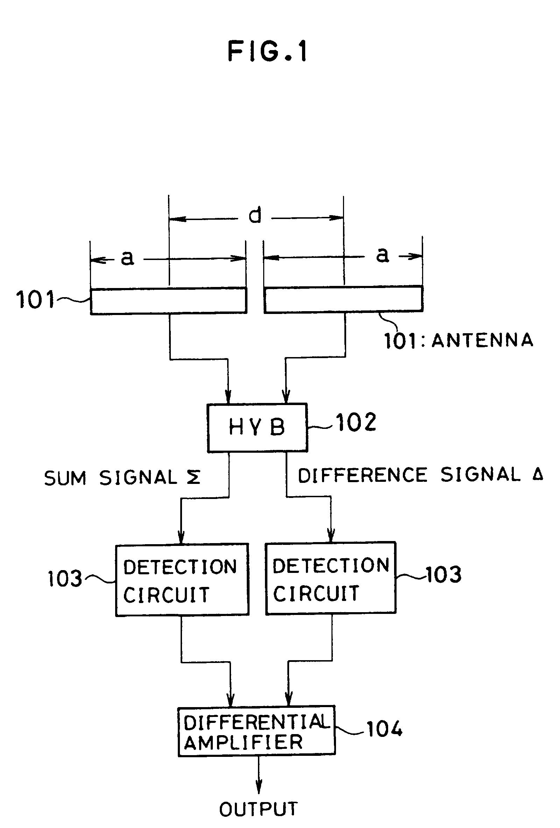

In order to improve these problems partly, conventionally, a beam compression method is known for example, from JP-A- 52 4147 for narrowing the beam width by subtracting a difference signal pattern of each received signal from a sum signal pattern of each received signal from the same two antennas of a monopulse power feed system. Fig. 1 of the accompanying drawings shows such an antenna apparatus for performing beam compression. Numerals 101,101 denote antennas of the monopulse power feed system having length a and distance d between their centres made equal to the length a. Numeral 102 denotes a hybrid circuit (HYB) for forming a sum signal Σ and a difference signal Δ for each received signal in the two antennas 101,101. Numerals 103 denote detection circuits for detecting the sum signal Σ and the difference signal Δ , and numeral 104 denotes a differential amplifier for outputting an antenna output signal after subtracting the difference signal Δ from the sum signal Σ.

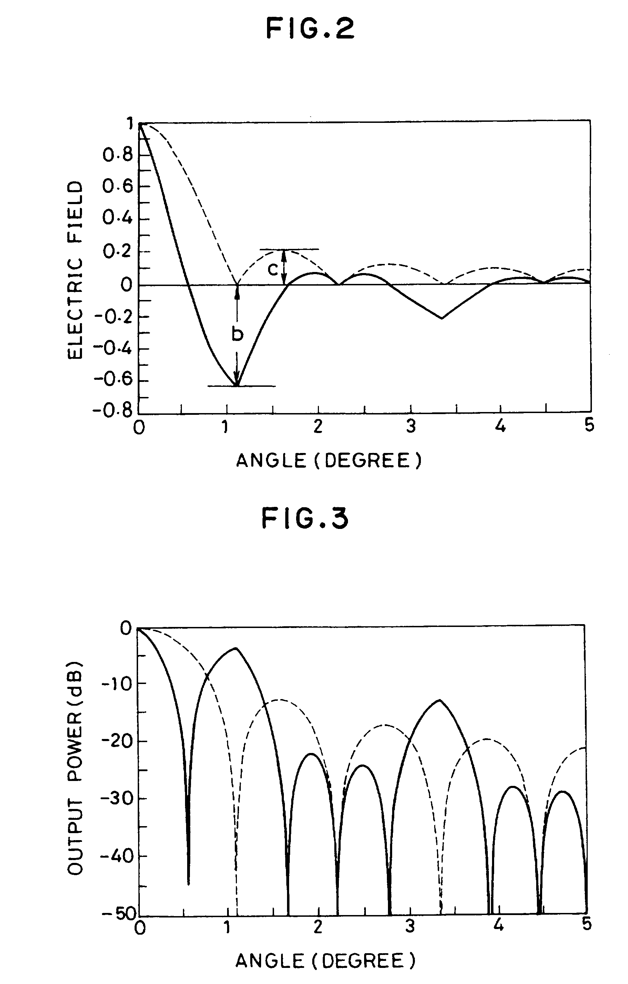

Fig. 2 and Fig. 3 illustrate the result of simulation in the case of using horn antennas, with a length "a" about 25.7 times as long as the received wavelength, as the antennas 101,101, and the figures illustrate field patterns (Fig. 2) and power patterns (Fig. 3) normalized on the basis of the value in the direction where the angle is at zero degrees, while the aperture surface distribution of the antennas is assumed to be a uniform distribution. In these figures for patterns, broken lines show the sum signal Σ and solid lines show output patterns; from these patterns, it is understood the beam compression is performed.

According to the conventional beam compression method as described, the sum signal patterns of the original antenna patterns are made subject to beam compression. However, large side lobes are generated in the output patterns as evident in Fig. 2 and Fig. 3. That is, in a near point where the value of the sum signal Σ takes zero for the first time, the value of the difference signal Δ shows a maximum value, then the value obtained by subtracting the value of the difference signal Δ from that of the sum signal Σ, is negative as shown in Fig. 2, but the value b is much larger than the size c of the side lobe of the sum signal pattern. Therefore, in some conventional beam compression methods, a side lobe is enlarged at the point where the difference signal Δ is larger than the sum signal Σ. Consequently, although beam compression can be achieved, the side lobe will be considerably larger than desired.

The present invention has been accomplished in order to solve the problems in the conventional beam compression methods as described, and the present invention is intended to provide a processing method for antenna patterns which allows the beam width of antenna patterns to be compressed and the side lobe to be reduced.

In accordance with a first aspect of the present invention, there is provided a method of processing antenna patterns using the same two antennas of a monopulse power feed system to receive a radio wave, and establishing a signal by subtracting a difference signal (Δ), representative of the difference between the received signals of the two antennas, from a sum signal (Σ) representative of the sum of the received signals of the two antennas, to provide a final antenna output signal, characterised by the step of performing a processing operation such as to make said final antenna output signal zero for achieving beam compression and side lobe reduction, whenever the value of said sum signal (Σ) is equal to or smaller than that of said difference signal (Δ), said signal achieved by subtracting the difference signal (Δ) from the sum signal (Σ) thereby being used to provide said output signal only when said sum signal (Σ) is greater than said difference signal (Δ).

In accordance with a second aspect of the present invention, there is provided a method of processing antenna patterns using the same two antennas of a monopulse power feed system to receive a radio wave, and establishing a signal by subtracting a difference signal (Δ), representative of the difference between the received signals of the two antennas, from a sum signal (Σ), representative of the sum of the received signals of the two antennas, to provide'a final antenna output signal, characterised by the step of generating a correction difference signal by multiplying said difference signal (Δ) by a coefficient larger than one, and performing a processing operation such as to make said final antenna output signal zero for achieving beam compression and side lobe reduction, by the subtraction of said correction difference signal from said sum signal (Σ), whenever the value of said sum signal (Σ) is equal to or smaller than that of said correction difference signal, said signal achieved by subtracting the correction difference signal from the sum signal (Σ) being used to provide said output signal when said sum signal (Σ) is greater than said correction difference signal.

In a method of processing antenna patterns such as this, first, beam width is reduced by establishing an output value by subtracting the difference signal from the sum signal Σ. Further, the side lobe is reduced by outputting zero when the sum signal Σ is equal to or smaller than the difference signal (Δ).

That is, as the side lobe becomes larger in a condition where the difference signal Δ is larger than the sum signal Σ, the side lobe will be made smaller if the output in that condition is made zero. Therefore it is possible both to compress beam width and reduce the side lobe, together.

The invention is described further hereinafter, by way of example only, with reference to the accompanying drawings, in which:-
Fig. 1 is a schematic block diagram of a conventional antenna apparatus of a monopulse power feed system for performing beam compression;
Fig. 2 illustrates field patterns of output signals from the antenna apparatus shown in Fig. 1;
Fig. 3 illustrates power patterns of output signals from the antenna apparatus shown in Fig. 1;
Fig. 4 is a schematic block diagram of an antenna apparatus for illustrating an embodiment of a processing method for antenna patterns in accordance with the present invention;
Fig. 5A and 5B illustrate a sum signal pattern and a difference signal pattern obtained in the antenna apparatus shown in Fig. 4;
Fig. 6A and 6B illustrate field patterns and power patterns of output signals obtained in the antenna apparatus shown in Fig. 4;
Fig. 7 illustrates a perspective view of a practical embodiment of an antenna system in the antenna apparatus shown in Fig. 4;
Fig. 8 is a circuit diagram of a practical embodiment of a signal processing section; and
Fig. 9 illustrates output signal patterns processed with a correction difference signal given the value of a difference signal Δ twice.

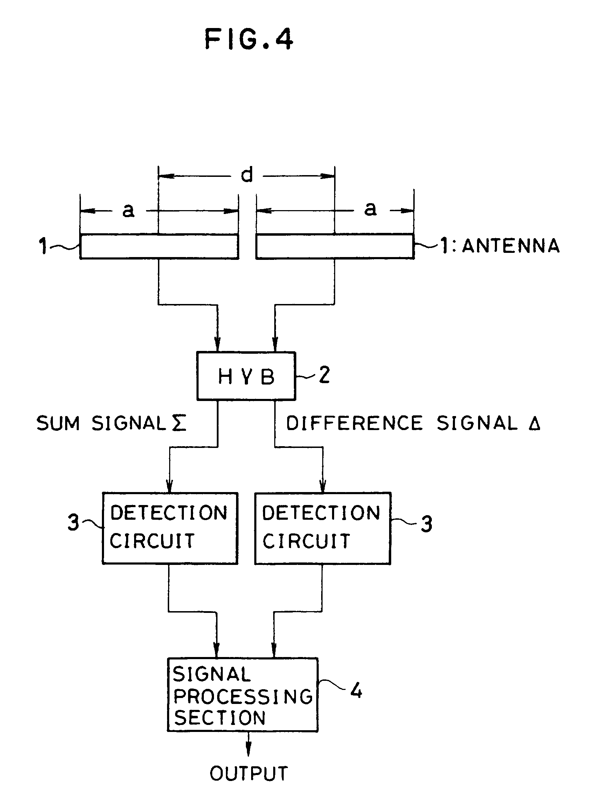

Referring first to Fig. 4, there is illustrated a schematic block diagram of an antenna apparatus used to illustrate an embodiment of the processing method for antenna patterns in accordance with the present invention. In Fig. 4, numerals 1,1 denote two receiving antennas having the same structure for a monopulse power feed system, with length a and distance d between their centres, using antennas such as horn antennas or array antennas and constructing an antenna system with these two antennas 1,1. Numeral 2 denotes a hybrid circuit (HYB), which forms a sum signal Σ and a difference signal Δ of the received signals from the two antennas 1,1. Numerals 3,3 denote detection circuits. Numeral 4 denotes a signal processing section, and is constructed such as to output a value obtained by subtracting the value of the difference signal Δ from that of the sum signal Σ if the value of the sum signal Σ is larger than that of the difference signal Δ , and to output zero if the value of the sum signal Σ is equal to or smaller than that of the difference signal Δ .

After radio waves arrive at the antenna apparatus constructed as described above, the hybrid circuit 2 to which are inputted the received signals from the antennas 1,1 outputs the sum signal Σ corresponding with a sum signal pattern and the difference signal Δ corresponding to the difference signal pattern. The outputs corresponding to a pattern which has been made beam width-compressed and a side lobe-reduced can be obtained by performing signal processing in the signal processing section 4 after demodulating those outputs with the detection circuits 3,3.

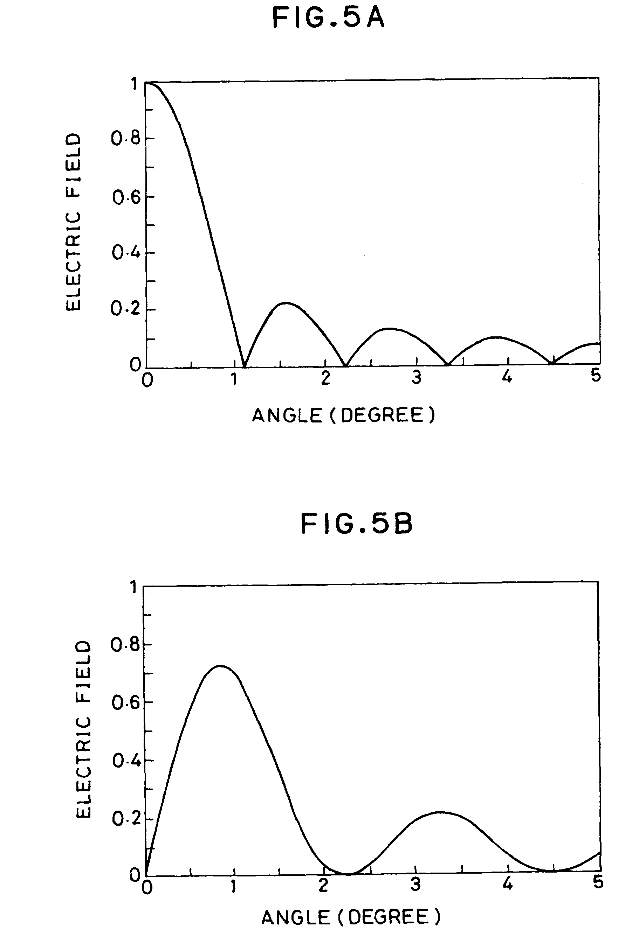

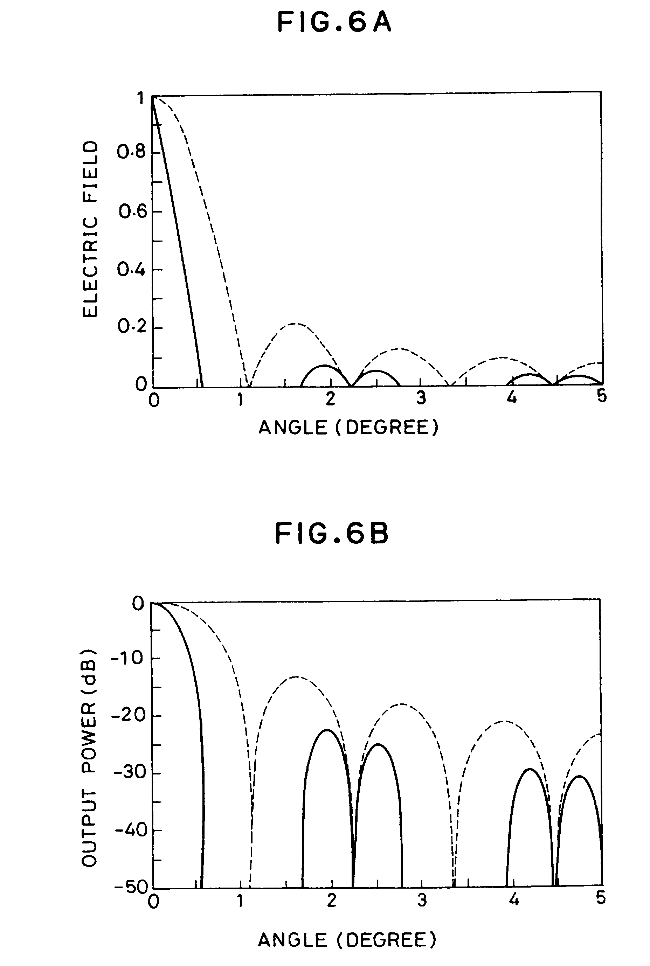

Fig. 5A and 5B and Fig. 6A and 6B illustrate the results of the simulations in the case of making the distance d between the centres of the antennas 1,1 the same value equal to the length a, by using horn antennas set with their length about 27.5 times as long as the wavelength of the received radio waves as antennas 1,1 in the antenna apparatus shown in Fig. 4. In this case, if the aperture surface distribution of the antennas is assumed to be a uniform distribution, then these figures illustrate field patterns and power patterns normalized on the basis of the value in the direction where the angle is at zero degrees. Fig. 5A illustrates a sum signal field pattern; Fig. 5B illustrates a difference signal field pattern. In Fig. 6A, broken lines show a sum signal field pattern, and solid lines shown an output field pattern made so as to have beam compression and a side lobe reduced. Fig. 6B illustrates power patterns shown them with power. It is found that a pattern which is made side lobe-reduced and beam-compressed by almost half can be obtained from these patterns.

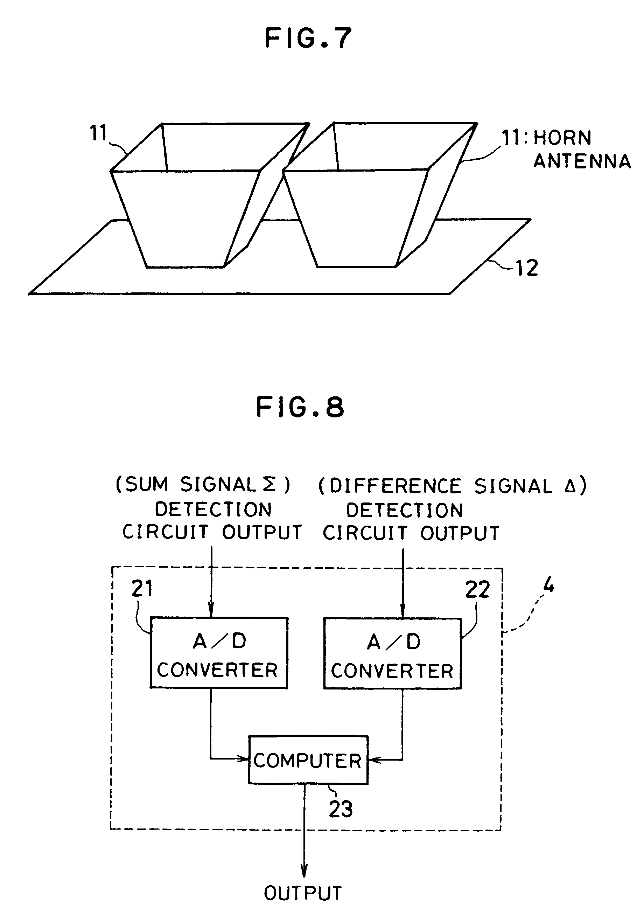

Fig. 7 illustrates a practical constructional embodiment of the antenna system of the antenna apparatus. In this constructional embodiment, the antenna system is comprised of two horn antennas 11,11 having the same constitution, numeral 12 denoting a supporting plate for the antennas.

In the case of performing analogical processing, the signal processing section can be composed with a general comparator and a differential circuit. In the case of performing digital processing, it can be composed with known technical means such as a means for performing comparison and subtraction on the output signals from detection circuits after converting them into digital signals with A/D converters. One such embodiment is shown in Fig. 8. In Fig. 8, numerals 21,22 are A/D converters for converting an analogical sum signal Σ and an analogical difference signal Δ demodulated in the detection circuits into digital signals; numeral 23 denotes a computer constructed such as to compare a sum signal Σ with a difference signal Δ in their values and output the value obtained by subtracting the value of the difference signal Δ from that of the sum signal Σ, or zero.

In a signal processing section composed like this, first, an analogical sum signal Σ and an analogical difference signal Δ demodulated in the detection circuits each are inputted into the A/D converters 21,22 and converted into digital values. Second, the digital signals are inputted into the computer 23, which then compares the sum signal Σ with the difference signal Δ in their values and operates such as to output zero if the value of the sum signal Σ is equal to or smaller than that of the difference signal Δ, otherwise it outputs the value obtained by subtracting the difference signal Δ from the sum signal Σ.

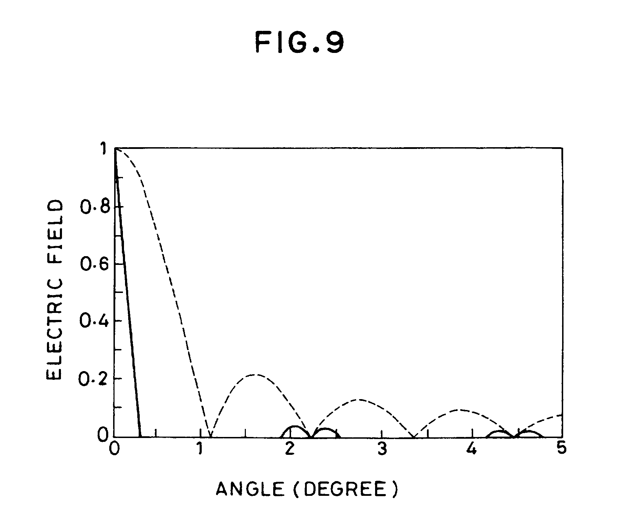

In the embodiment as described, the beam width can be still compressed and the side lobe can be also reduced more by using a correction signal to multiply the difference signal Δ by a coefficient larger than one to a new difference signal Δ and performing the same processing. That is, in principle, antenna patterns approaching a delta function can be realised, because beam width is allowed to be made small without limit and the side lobe is allowed to be made small without limit by adopting a larger coefficient for multiplying the value of the difference signal Δ. As an embodiment for that, Fig. 9 illustrates the result of simulation when a correction difference signal, made twice the value of the difference signal Δ , is processed as a new difference signal Δ . Further, the construction of an antenna system in this case is the same as in the case of the result of the simulation shown in Fig. 5A and 5B and Fig. 6A and 6B. In Fig. 9, broken lines show a sum signal pattern, and solid lines show an output pattern which is beam-compressed more and side lobe-reduced more.

As described above, beam compression and side lobe reduction can be realised, according to the present invention. Moreover the beam width can be compressed more, and the side lobe can be reduced more, by using a correction difference signal obtained by multiplying a difference signal Δ by a coefficient larger than one to a new difference signal Δ .

## Claims

1. A method of processing antenna patterns using the same two antennas (1,1) of a monopulse power feed system to receive a radio wave, and establishing a signal by subtracting a difference signal (Δ), representative of the difference between the received signals of the two antennas (1,1), from a sum signal (Σ) representative of the sum of the received signals of the two antennas, to provide a final antenna output signal, characterised by the step of:
performing a processing operation such as to make said final antenna output signal zero for achieving beam compression and side lobe reduction, whenever the value of said sum signal (Σ) is equal to or smaller than that of said difference signal (Δ), said signal achieved by subtracting the difference signal (Δ) from the sum signal (Σ) thereby being used to provide said output signal only when said sum signal (Σ) is greater than said difference signal (Δ).

2. A method of processing antenna patterns using the same two antennas (1,1) of a monopulse power feed system to receive a radio wave, and establishing a signal by subtracting a difference signal (Δ), representative of the difference between the received signals of the two antennas (1,1), from a sum signal (Σ), representative of the sum of the received signals of the two antennas, to provide a final antenna output signal, characterised by the step of:
generating a correction difference signal by multiplying said difference signal (Δ) by a coefficient larger than one, and performing a processing operation such as to make said final antenna output signal zero for achieving beam compression and side lobe reduction, by the subtraction of said correction difference signal from said sum signal (Σ), whenever the value of said sum signal (Σ) is equal to or smaller than that of said correction difference signal, said signal achieved by subtracting the correction difference signal from the sum signal (Σ) being used to provide said output signal when said sum signal (Σ) is greater than said correction difference signal.

## Patentansprüche

1. Verfahren zur Verarbeitung von Antennenstrahlungscharakteristiken unter Verwendung derselben beiden Antennen (1, 1) eines Monopuls-Stromspeisesystems für den Empfang von Funkwellen und unter Erzeugung eines Signals durch Subtrahieren eines Differenzsignals ( △ ), das für die Differenz zwischen den empfangenen Signalen der beiden Antennen (1, 1) repräsentativ ist, von einem Summensignal (Σ), das für die Summe der von den beiden Antennen empfangenen Signale repräsentativ ist, um ein endgültiges Antennenausgangssignal bereitzustellen, gekennzeichnet durch den folgenden Schritt:
Durchführen eines Verarbeitungsvorgangs wie beispielsweise die Nullstellung des genannten endgültigen Antennenausgangssignals zur Erzielung von Keulenkompression und Nebenkeulenreduktion immer dann, wenn der Wert des genannten Summensignals (Σ) gleich dem oder kleiner als das genannte(n) Differenzsignal (△) ist, wobei das genannte, durch Subtrahieren des Differenzsignals (△) von dem Summensignal (Σ) erhaltene Signal somit benutzt wird, um das genannte Ausgangssignal nur dann bereitzustellen, wenn das genannte Summensignal (Σ) größer ist als das genannte Differenzsignal (△ ).

2. Verfahren zum Verarbeiten von Antennenstrahlungscharakteristiken unter Verwendung derselben beiden Antennen (1, 1) eines Monopuls-Stromspeisesystems für den Empfang von Funkwellen und unter Erzeugung eines Signals durch Sub-trahieren eines Differenzsignals (△), das für die Differenz zwischen den empfangenen Signalen der beiden Antennen (1, 1) repräsentativ ist, von einem Summensignal (Σ), das für die Summe der empfangenen Signale der beiden Antennen repräsentativ ist, um ein endgültiges Antennenausgangssignal bereitzustellen, gekennzeichnet durch den folgenden Schritt:
Generieren eines Korrekturdifferenzsignals durch Multiplizieren des genannten Differenzsignals ( △ ) mit einem Koeffizienten von größer als Eins, und Durchführen eines Verarbeitungsvorgangs wie beispielsweise die Nullstellung des genannten endgültigen Antennenausgangssignals zur Erzielung von Keulenkompression und Nebenkeulenreduktion durch die Subtraktion des genannten Korrekturdifferenzsignals von dem genannten Summensignal (Σ) immer dann, wenn der Wert des genannten Summensignals (Σ) gleich dem oder kleiner als der des genannten Korrekturdifferenzsignals ist, wobei das genannte, durch Subtrahieren des Korrekturdifferenzsignals von dem Summensignal (Σ) erhaltene Signal dazu benutzt wird, das genannte Ausgangssignal bereitzustellen, wenn das genannte Summensignal (Σ) größer ist als das genannte Korrekturdifferenzsignal.

## Revendications

1. Méthode de traitement de diagrammes d'antennes utilisant les deux mêmes antennes (1,1) d'un système à alimentation mono-impulsion pour recevoir une onde radio, et établissant un signal en soustrayant un signal de différence (Δ), représentatif de la différence entre les signaux reçus des deux antennes (1,1), d'un signal de somme (Σ), représentatif de la somme des signaux reçus des deux antennes, pour fournir un signal de sortie d'antenne définitif, caractérisée par l'étape de:
réalisation d'une opération de traitement de manière à rendre le signal de sortie d'antenne définitif égal à zéro pour parvenir à la densité admissible de faisceau et une réduction des lobes latéraux, chaque fois que la valeur dudit signal de somme (Σ) est égale ou inférieure à celle dudit signal de différence (Δ), ledit signal obtenu en soustrayant le signal de différence (Δ) du signal de somme (Σ) étant ainsi utilisé pour fournir ledit signal de sortie seulement quand ledit signal de somme (Σ) est supérieur audit signal de différence (Δ).

2. Méthode de traitement de diagrammes d'antennes utilisant les deux mêmes antennes (1,1) d'un système à alimentation mono-impulsion pour recevoir une onde radio, et établissant un signal en soustrayant un signal de différence (Δ), représentatif de la différence entre les signaux reçus des deux antennes (1,1), d'un signal de somme (Σ), représentatif de la somme des signaux reçus des deux antennes, pour fournir un signal de sortie d'antenne définitif, caractérisée par l'étape de:
génération d'un signal de différence de correction en multipliant ledit signal de différence (Δ) par un coefficient supérieur à un, et exécutant une opération de traitement de manière à rendre ledit signal de sortie d'antenne définitif égal à zéro pour parvenir à la densité admissible de faisceau et une réduction des lobes latéraux, par la soustraction dudit signal de différence de correction dudit signal de somme (Σ), chaque fois que la valeur dudit signal de somme (Σ) est égale ou inférieure à celle dudit signal de différence de correction, ledit signal obtenu en soustrayant le signal de différence de correction du signal de somme (Σ) étant utilisé pour foumir ledit signal de sortie seulement quand ledit signal de somme (Σ) est supérieur audit signal de différence de correction.
